# EUROPEAN PATENT APPLICATION

(11) **EP 1 995 346 A2**
(43) Date of publication of application: **26.11.2008**
(21) Application number: 08251806.9
(22) Date of filing: 23.05.2008
(51) Int. Cl.: C23C 10/02, C23C 10/04, C23C 10/48, C23C 10/60, C23C 28/02, C23C 30/00

(54) **Coated gas turbine engine component repair**

(30) Priority: 25.05.2007 US 805960
(71) Applicant: United Technologies Corporation, Hartford, CT 06101 (US)
(72) Inventor: Milleville, Timothy A., Portland Connecticut 06480 (US); Kinstler, Monika D., Glastonbury Connecticut 06033 (US); Litton, David A., Rocky Hill Connecticut 06067 (US); Paulonis, Daniel F., Higganum Connecticut 06441 (US)
(74) Representative: Tomlinson, Kerry John

(57) **Abstract**

A method of repairing a component of a gas turbine engine that includes a metallic substrate (24), an existing coating, and a diffusion layer formed in the metallic substrate adjacent to the coating. The method includes removing at least a portion of the existing aluminide coating, removing material forming the diffusion layer, applying a new metallic layer (32) to the metallic substrate, and applying a new aluminide coating (28B) over the new metallic layer to form a new diffusion layer (30B) in the new metallic layer. The new metallic layer is a substantially homogeneous material that is substantially similar in chemical composition to that of the metallic substrate, and the new metallic layer (32) forms a structural layer having a thickness selected to provide a specified contour to the component.

## Description

### BACKGROUND OF THE INVENTION

The present invention relates to repairs of gas turbine engine components, and more particularly to repairs for gas turbine engine components having aluminide coatings.

Components of gas turbine engines, such as airfoils, transition ducts and other parts, frequently are provided with aluminide coatings to promote corrosion and oxidation resistance. Aluminide coatings include a broad variety of coating compounds that include aluminum with at least one other more electropositive element. The parent materials of these coated engine components are frequently nickel- or cobalt-based superalloys. When the aluminide coatings are applied to the parent alloys, a diffusion layer is formed in the parent alloys beneath the exterior aluminide coating layers.

During operation of the engine, the coated components may become worn or damaged, due to oxidation, erosion, foreign object damage, or other factors. Over time, it may become necessary to repair or replace the aluminide coating in order to continue using the worn or damaged components. Over the full useful life of a particular component, numerous coating repairs may need to be performed in order to allow continued use. These processes typically involve first stripping any remaining coatings. When the remaining coatings are removed, the diffusion layer must also be removed in order to prevent the formation of a deleterious microstructure in the replacement coating. A new, replacement aluminide coating is then applied.

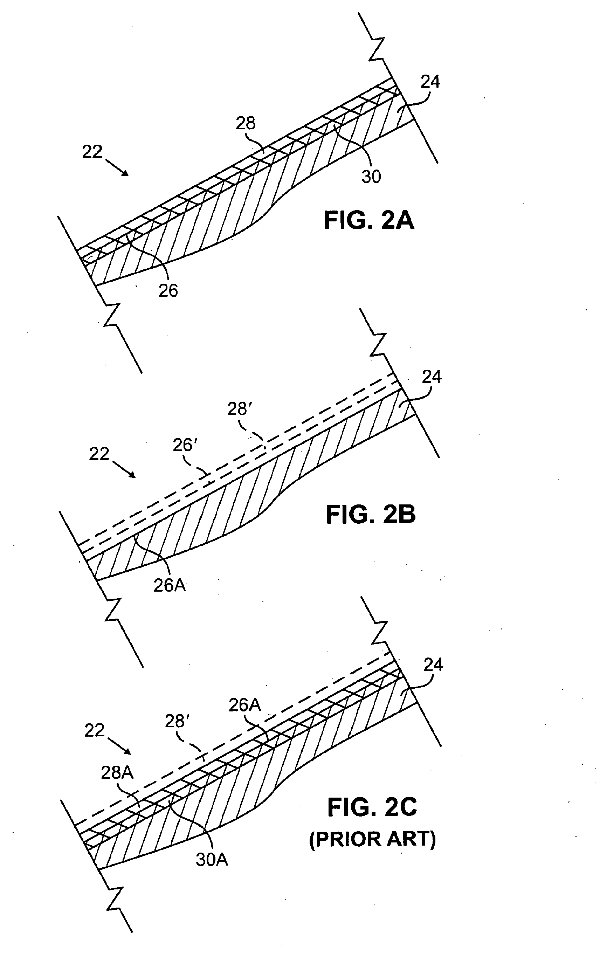

A problem with known repairs for aluminide coated components is that removal of the diffusion layer results in a reduction of the component contour (or envelope) from original blueprint dimensions. On average, about 1.5 mils (38 µm) of parent alloy is lost on each exterior surface of the parent material where such coating repairs are performed that remove the diffusion layer (see FIG. 2C). Loss of parent material can reduce the component contour (or envelope) below minimum allowable limits, especially in situations where repeated repairs are performed on a given component over time, which generally necessitates scrapping the component. There are known repairs that attempt to restore dimensions of components after a diffusion layer has been removed. However, those methods deal only with the application of non-structural layers, and do not restore the blueprint contour of the structural materials of the component.

It is desired to provide a repair method that expands repairable limits for gas turbine engine components and lessens the need to reduce structural contours (or envelopes) of gas turbine engine components in order to repair or replace aluminide coatings.

### BRIEF SUMMARY OF THE INVENTION

A method of repairing a component of a gas turbine engine that includes a metallic substrate, an existing aluminide coating, and a diffusion layer formed in the metallic substrate adjacent to the coating. The method includes removing at least a portion of the existing aluminide coating, removing material forming the diffusion layer, applying a new metallic layer to the metallic substrate, and applying a new aluminide coating over the new metallic layer to form a new diffusion layer in the new metallic layer. The new metallic layer is a substantially homogeneous material that is substantially similar in chemical composition to that of the metallic substrate, and the new metallic layer forms a structural layer having a thickness selected to provide a specified contour to the component.

### BRIEF DESCRIPTION OF THE DRAWINGS

FIG. 1A is a side view of a turbine blade.
FIG. 1B is a cross sectional view of the turbine blade, taken along line A-A of FIG. 1.
FIG. 2A is an enlarged cross-sectional view of region II of FIG. 1B.
FIG. 2B is an enlarged cross-sectional view of region II of FIG. 1B during a repair process according to the present invention.
FIG. 2C is an enlarged cross-sectional view of region II of FIG. 1B after a prior art repair process has been performed.
FIG. 2D is an enlarged cross-sectional view of region II of FIG. 1B during the repair process of the present invention.
FIG. 2E is an enlarged cross-sectional view of region II of FIG. 1B upon completion of the repair process of the present invention.
FIG. 3 is a flow chart of a repair process according to the present invention.

### DETAILED DESCRIPTION

In general, the present invention relates to repairs of gas turbine engine components having aluminide coatings, such as coatings that include the beta NiAl phase, the gamma-prime Ni₃Al phase, the gamma Ni phase, and any combination thereof, and each of those phases can be solid solutions that contain, for example, aluminum, cobalt, chrome, yttrium, hafnium, silicon, tantalum, tungsten, rhenium, molybdenum or ruthenium. The repair involves removing existing coatings as well as a diffusion layer formed in a metallic parent material. A new, structural "build-up" material is applied to the remaining parent material to restore an original blueprint contour of the component, which helps to compensate for the loss of material in the diffusion layer. Then a new aluminide coating is applied over the new "build-up" material, creating a new diffusion layer. The new "build-up" material can be a substantially homogeneous material of substantially the same chemical composition as the metallic parent material. The new "build-up" material can be applied using directed vapor deposition (DVD) or plating processes.

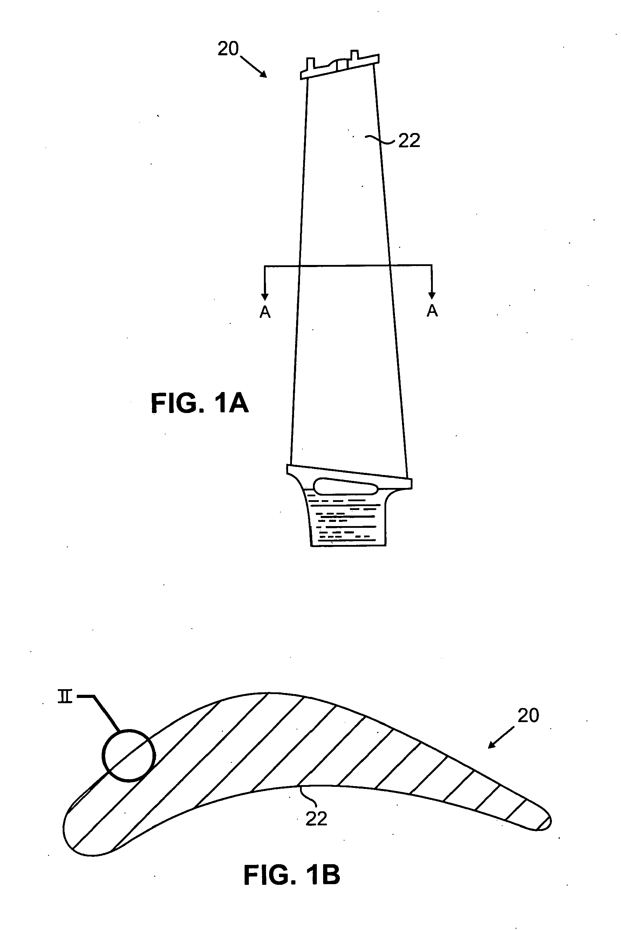

FIG. 1A is a side view of an exemplary turbine blade 20 for a gas turbine engine. FIG. 1B is a cross sectional view of the turbine blade 20, taken along line A-A of FIG. 1. The turbine blade 20 includes an airfoil section 22 that has a relatively uniform aluminide coating applied over substantially an entire exterior surface of at least the airfoil section 22. The turbine blade 20, including the airfoil section 22, is made of a metallic parent material that can be a nickel-based superalloy, although other metals or alloys can be used in alternative embodiments. The metallic parent material defines a contour (or envelope) of the airfoil 22, which corresponds to original blueprint specifications when the turbine blade 20 is originally fabricated. The turbine blade 20 is shown as an example of a component that frequently includes an aluminide coating. However, it should be noted that the illustrated configuration of the turbine blade 20 is merely exemplary, and the present invention applies to turbine blades of any configuration. Moreover, it should be recognized that other gas turbine engine components can have aluminide coatings, and the present invention is not limited to any particular component or set of components.

FIG. 2A is an enlarged cross-sectional view of region II of the turbine blade 20 of FIG. 1B, at a convex suction surface of the airfoil 22. As shown in FIG. 2A, the airfoil 22 includes a parent material 24 that extends to a component contour boundary 26, an aluminide coating layer 28, and a diffusion layer 30 formed in the parent material 24. The aluminide coating layer 28 can be a single homogeneous layer, or can comprise multiple layers that can be distinguished by their microstructures (the aluminide coating layer 28 is represented as a single layer in FIG. 2A for simplicity). The aluminide coating layer 28 can also serve as a bond coat for an optional primary outer layer (the optional primary outer layer is not depicted in FIG. 2A). The diffusion layer 30 is formed in the parent material 24 when the aluminide coating layer 28 is applied, and the depth or thickness of the diffusion layer 30 will vary according to the materials and procedures used to apply the aluminide coating layer 28. The contour boundary 26 is defined at an exterior boundary of the diffusion layer 30. FIG. 2A illustrates the configuration of the airfoil 22 after original fabrication, at original blueprint specifications. Therefore, contour boundary 26 corresponds to original blueprint dimensions. However, those of ordinary skill in the art will recognize that the layers shown schematically in the accompanying drawings are simplified, and on actual components may be less distinct and less uniform than depicted. Moreover, while only a portion of turbine blade is shown in detail, the present repair can apply to any exterior surface of the blade 20, although typically aluminide coatings are only applied to the airfoil 22. It should be also noted that the aluminide coating layer 28 is shown and described herein as an outwardly grown coating. However, the present invention applies equally to inwardly grown coatings where the original contour boundary is defined at the outermost surface of the aluminide coating layer 28.

The turbine blade 20 can be placed in service in a gas turbine engine. As a result of such use, the airfoil section 22 of the blade 20 is prone to wear and damage. After being placed in service, the blade 20 can be inspected in order to make a determination as to whether replacement of the aluminide coating layer 28 is necessary or desired.

Once repair has been undertaken, a preliminary step is to remove any remaining portions of the aluminide coating layer 28, as well as to remove material forming the diffusion layer 30. It is generally necessary to remove the material of the diffusion layer 30 in order to prevent the formation of a deleterious microstructure in the replacement aluminide coating. Material removal can be accomplished using known chemical or mechanical methods. Removal of the original aluminide coating layer 28 and the diffusion layer 30 can be accomplished with a single removal process that removes both layers 28 and 30, or as separate steps using either identical or distinguishable processes to remove those layers 28 and 30 individually.

FIG. 2B is an enlarged cross-sectional view of the airfoil 22 at region II of FIG. 1B after the aluminide coating layer 28 and the diffusion layer 30 of FIG. 2A have been removed. A new reduced contour boundary 26A of the parent material 24 is formed that is smaller than the original contour boundary 26 prior to removal of material, which is designated in phantom at boundary line 26' for reference. Moreover, region 28' corresponds to the location of the original aluminide coating layer 28 prior to removal.

At this point it is helpful to understand prior art repair methods. FIG. 2C is an enlarged cross-sectional view of region II of FIG. 1B after a prior art repair process has been performed on the airfoil 22. With such a prior art repair method, a new aluminide coating layer 28A is applied directly to the reduced contour boundary 26A at a thickness that is identical to that of the original aluminide coating layer 28. The application of the new aluminide coating layer 28A forms a new diffusion layer 30A in the original parent material 24. This results in a net loss of component contour dimensions, and will eventually reduce the resultant component contour (i.e., reduced contour boundary 26A) below allowable limits, especially if such a repair is repeated multiple times on the same component over time.

According to the present invention, the airfoil 22 is essentially restored to the original contour boundary 26 before a new aluminide coating is applied. The original contour boundary 26 is restored by applying a new structural "build-up" layer upon the surface of the parent material 24 at the reduced contour boundary 26A. The new structural layer is made up of a substantially homogeneous metallic material that is substantially similar in chemical composition to the parent material 24. For example, the new structural layer and the parent material 24 can both be made of the same hickel-based superalloy.

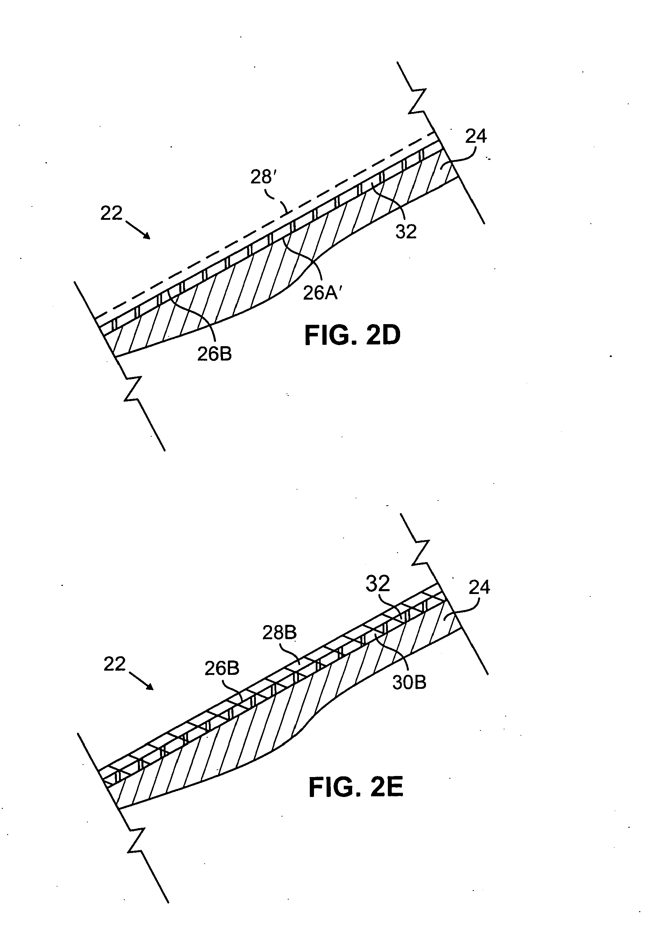

FIG. 2D is an enlarged cross-sectional view of the airfoil 22 at region II of FIG. 1B after a new structural layer 32 has been applied to the surface of the parent material 24 at the reduced contour 26A (designated in FIG. 2D as location 26A'). A new contour boundary 26B is defined at an exterior surface of the new structural layer, and the location of the new contour boundary 26B corresponds substantially to the original contour boundary 26 and thus also to the original blueprint specifications.

The new structural layer 32 can be deposited in a number of different ways in alternative embodiments of the present repair. Directed vapor deposition (DVD) is one suitable process that involves vaporizing a material from multiple crucibles using an electron beam and then condensing the vaporized material on a desired component inside a chamber, much like with electron beam physical vapor deposition (EB-PVD) processes. The component on which the vapor condenses can be rotated to provide even coating. DVD further involves the use of a carrier gas jet of an inert carrier gas (e.g., helium) to direct vaporized material to surfaces of the target component where condensation occurs. The carrier gas jet is typically a single gas stream provided either coaxially with the vaporized material or perpendicular to the flow of the vaporized material. An advantage of the DVD process is that it permits complex alloy chemistries of the new structural layer 32 to be deposited on the parent material 24, making the process well-suited for applying nickel-based superalloy materials without disrupting the complex chemistries of those alloys. In addition, applying material of the new structural layer 32 using a DVD process can involve a number of unique steps that can be used as desired with particular components. For example, a mask can be positioned relative to a selected first portion of a surface where material will be applied while leaving another portion of the surface uncovered in order to reduce the amount of material applied to the first portion of the surface covered by the mask. As another example, a secondary carrier gas jet can be provided to direct material vapor to areas that would otherwise be concealed or hidden from a single coaxial carrier gas jet, which may be helpful when "build-up" material is applied to components having complex geometries. Also, a component where condensation will occur can be charged and the material vapor cloud ionized in order to facilitate the DVD process.

Plating is a well-known process that provides an alternative method for depositing material of the new structural layer 32. Plating is well suited to applications involving materials comprising single-element metals or relatively simple alloys. Known types of plating process include electroplating, sputtering, and other thin film deposition techniques. Electroplating is perhaps the most basic type of plating process, and, in the present context, involves supplying a metallic coating material that acts as an anode and charging the parent material 24 such that it acts as a cathode. When placed in an ionic aqueous solution and current is applied between the anode and cathode, material is plated onto the cathode to form the new structural layer 32 on the parent material 24.

With any method used to apply the material of the new structural layer 32, thickness of the new structural layer 32 can be controlled using weight gain analysis. The process of weight gain analysis involves performing a material application to a scrap part (e.g., using the DVD process) and destructively analyzing the scrap part to correlate the thickness of the applied material as a function of weight gain to the scrap part. Thickness of the new structural layer 32 as applied can be determined through nondestructive weight gain measurements of the turbine blade 20 that are correlated to measurements from the scrap part. The weight gain analysis correlation can be periodically re-determined to ensure desired process tolerances are met over time. In this way, application of the new structural layer 32 can be controlled so as to produce the new contour boundary 26B at substantially the same dimensions as the original contour boundary 26.

After the new structural layer 32 has been applied, a new aluminide coating layer is applied to the surface of the new structural layer 32 defined at the new contour boundary 26B. The new aluminide coating layer can be applied in a well-known manner, and can be applied in substantially the same manner and to substantially the same depth as during original fabrication of the blade 20. Application of the new aluminide coating layer forms a new diffusion layer. Heat treatment can be performed on the airfoil 22 before and/or after application of the new aluminide layer, in order to provide desired microstructures and other properties. For example, heat treatment can help provide substantially the same microstructure in the new structural layer 32 as in the parent material 24.

FIG. 2E is an enlarged cross-sectional view of the airfoil 22 at region II of FIG. 1B upon completion of the repair process of the present invention. A new aluminide coating layer 28B is located on the surface of the new structural layer defined by the new contour boundary 26B. Application of the new aluminide coating layer 28B forms a new diffusion layer 30B in at least a portion of the new structural layer 32. For particular applications, the new diffusion layer 30B may extend through only a portion of the new structural layer 32, through substantially the entire new structural layer 32, or past the new structural layer 32 and into the parent material 24. However, the new diffusion layer 30B will typically have a depth that is approximately the same as the depth of the new structural layer 32 when the new aluminide coating layer 28B has a composition and application method similar to that of original fabrication.

Upon completion of repairs according to the present invention, the turbine blade 20 can be returned to service. It is contemplated that upon further use in service, the turbine blade 20 may require further repairs to replace the aluminide coating again. In that instance, the repair process described above can be repeated. In that context, any new structural layer 32 from previous repairs can be considered an integral part of the parent material 24 subject to partial or complete removal and the reapplication of additional new layers thereupon.

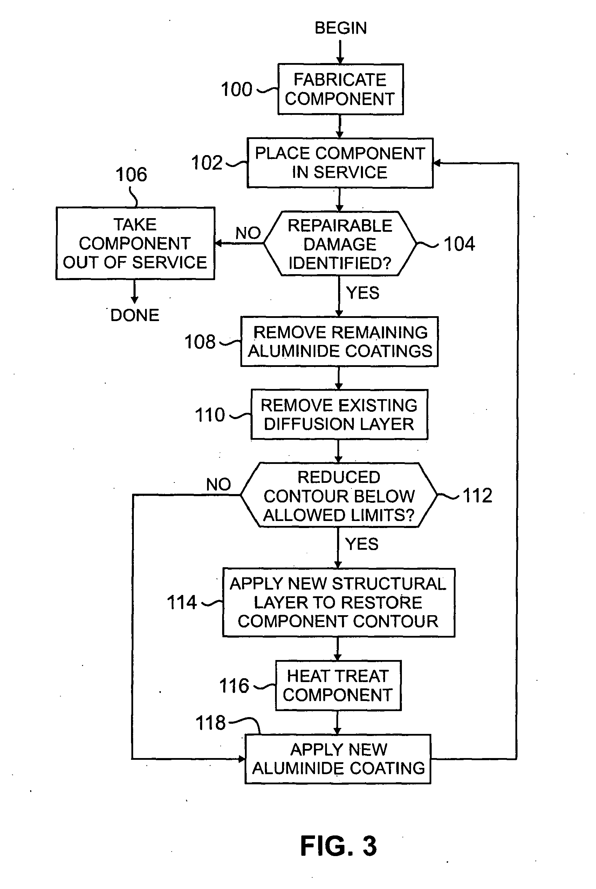

FIG. 3 is a flow chart that details the repair process described above. The process begins with the original fabrication of a gas turbine engine component (step 100). The component is then placed in service in a gas turbine engine (step 102). After some period of use, the component is inspected to determine if the component has sustained any damage, either due to normal wear or other causes, that makes replacement of its aluminide coating desirable (step 104). This inspection takes into account repairable limits of the present repair process. Any component deemed to be outside of repairable limits is generally taken out of service (step 106), and can be scrapped or salvaged. If repairable damage is identified, the next step is to remove remaining aluminide coatings from the component (step 108), and to remove the existing diffusion layer from the parent material of the component (step 110). At this point, another inspection is performed, for instance using known ultrasonic inspection techniques, to determine if the reduced contour of the component (i.e., the residual wall thickness of the component) is below allowed limits (step 112). Allowed limits are generally specified by original component specifications and repair manuals. If the reduced contour is below allowed limits, a new structural layer of "build-up" material is applied to the remaining parent material of the component in order to restore an original blueprint contour to the component. (step 114). As noted above, the new "build-up" material can be a substantially homogeneous material of substantially the same chemical composition as the parent material. The new "build-up" material can be applied at step 114 using directed vapor deposition (DVD), plating, or other processes. Next, heat treatment is performed to provide a microstructure to the new structural layer that substantially matches a microstructure of the parent material (step 116). Then a new aluminide coating is applied over the new structural layer (step 118). It should be noted that in alternative embodiments, the heat treatment step can be omitted or performed at a different point during the repair process.

If at step 112 it is determined that the reduced contour is not below allowed limits, a new aluminide coating can be applied to the parent material (step 118) without the application of any "build-up" material. Thus, the steps required to apply the "build-up" material can be avoided in some situations to reduce costs and simplify repairs.

Once all repairs are completed, the component can be returned to service (step 102). After the repaired component has returned to service, subsequent repairs can be repeatedly performed on the component, at later occasions, in substantially the same manner.

Although the present invention has been described with reference to preferred embodiments, workers skilled in the art will recognize that changes can be made in form and detail without departing from the scope of the invention, which is defined by the claims and their equivalents. For instance, the aluminide coatings used according to the present invention can have nearly any composition, and replacements coatings can differ from original coatings as desired. Moreover, the processes used for repair steps such as applying new structural "build-up" layers and applying the aluminide coatings can vary as desired for particular applications. In addition, it should be recognized that the present repair can be performed in conjunction with any other repairs desired to be performed on a particular component.

## Claims

1. A method of repairing a component of a gas turbine engine that includes a metallic substrate (24), an existing aluminide coating (28), and a diffusion layer (30) formed in the metallic substrate adjacent to the coating, the method comprising:
removing at least a portion of the existing aluminide coating (28);
removing material forming the diffusion layer (30);
applying a new metallic layer (32) to the metallic substrate, wherein the new metallic layer comprises a substantially homogeneous material that is substantially similar in chemical composition to that of the metallic substrate, and wherein the new metallic layer forms a structural layer having a thickness selected to provide a specified contour to the component; and
applying a new aluminide coating (28B) over the new metallic layer (32), wherein applying the new aluminide coating forms a new diffusion layer (30B) in the new metallic layer.

2. The method of claim 1, wherein the new metallic layer (32) is applied to the metallic substrate (24) using a directed vapor deposition process.

3. The method of claim 2, wherein the step of applying the new metallic layer to the metallic substrate using the directed vapor deposition process comprises:
providing a first carrier gas stream of an inert gas;
providing a second carrier gas stream of an inert gas, wherein the second carrier gas stream directs new metallic material to a non-line-of-sight surface of the metallic substrate.

4. The method of claim 2 or 3 and further comprising:
positioning a mask relative to a first surface region of the metallic substrate while leaving a second surface region uncovered, wherein the mask reduces the thickness of the new metallic layer at the first surface region relative to the second surface region.

5. The method of claim 1, wherein the new metallic layer (32) is applied to the metallic substrate (24) using a plating process.

6. The method of any preceding claim, wherein the metallic substrate comprises a nickel-based superalloy.

7. The method of any preceding claim, wherein the material forming the diffusion layer (30) is removed by chemical means.

8. The method of any preceding claim and further comprising:
heat treating the metallic substrate (24) and the new metallic layer (32) such that the microstructure of the new metallic layer is substantially similar to that of the metallic substrate.

9. A repaired apparatus for a gas turbine engine, the apparatus comprising:
a previously-in-service component substrate comprising a metallic parent material (24) and having an exterior dimension less than a predetermined final exterior dimension;
a structural layer of new metallic material (32) applied to the substrate to build-up the component substrate to the predetermined final exterior dimension, wherein the new metallic material has a substantially homogeneous chemical composition that is substantially similar to that of the metallic parent material; and
a new aluminide coating (28B) applied over the layer of new metallic material, wherein a diffusion region (30B) is formed in the layer of new metallic material (32).

10. The apparatus of claim 9, wherein the component substrate comprises an airfoil.

11. The apparatus of claim 9 or 10, wherein the parent material comprises a nickel-based superalloy.

12. The apparatus of claim 9, 10 or 11, wherein the structural layer of new metallic material comprises a nickel-based superalloy.

13. The apparatus of claim 9, 10, 11 or 12 wherein the aluminide layer comprises:
a base coat; and
a primary layer located on top of the base coat.

14. The apparatus of any of claims 9 to 13 wherein the depth of the diffusion region (30B) is substantially equal to the thickness of the layer of new metallic material (32).
